# EUROPÄISCHE PATENTANMELDUNG

(11) **EP 0 957 566 A2**
(43) Veröffentlichungstag der Anmeldung: **17.11.1999**
(21) Anmeldenummer: 99250136.1
(22) Anmeldetag: 26.04.1999
(51) Int. Cl.: H02K 11/00, H02K 7/102

(54) **Drehzahl- und drehrichtungssteuerbarer Asynchronmotor für Fahrantriebe, insbesondere für Hub- und Fahrwerke**

(30) Priorität: 14.05.1998 DE 19823379
(71) Anmelder: MANNESMANN Aktiengesellschaft, 40213 Düsseldorf (DE)
(72) Erfinder: Weber, Gerhard, Dipl.-Ing., 58339 Breckerfeld (DE); Müller, Anton, 58300 Wetter (DE); Persico, Giuliano, Dipl.-Ing., 58300 Wetter (DE); Krebs, Wolfgang, Dipl.-Ing., 58300 Wetter (DE); Grieb, Eckerhardt, Dipl.-Ing., 58093 Hagen (DE)
(74) Vertreter: Meissner, Peter E., Dipl.-Ing.

(57) **Zusammenfassung**

Die Erfindung betrifft einen drehzahl- und drehrichtungssteuerbaren Asynchronmotor (12) für Fahrantriebe, insbesondere für Hub- und Fahrwerke, mit einem Motorgehäuse (11), das auf beiden Stirnseiten je ein Lagerschild (14) aufweist und eine ringförmige von einer Motorwelle getragene Kurzschlußwicklung umfaßt. Um einen kompatkbauenden Asynchronmotor mit Zylinderläufer für drehzahl- und drehrichtungsgesteuerte Fahrantriebe kostengünstig so auszugestalten, daß dieser auch bei Vorhandensein einer hinterseitigen Magnetbremse störungsfrei steuerbar ist, umfaßt das Motorgehäuse (11) auf der der Abtriebsseite gegenüberliegenden hinteren Seite mindestens zwei in Motordrehrichtung gesehen hintereinanderliegende Sensor-Einheiten (5) und eine mit den Sensor-Einheiten (5) zusammenwirkende, zwischen der Kurzschlußwicklung und dem hinterseitigen Lagerschild (14) auf der Motorwelle befestigte kreisförmige Drehscheibe (3) mit Modulationselementen (3a, 3b), wobei die Modulationselemente (3a, 3b) am Außenumfang der Drehscheibe (3) angeordnet sind und wobei die Sensor-Einheiten (5) jeweils einen opto-elektronischen Empfänger (9) und einen gegenüberliegenden elektro-optischen Sender (10) aufweisen, deren optische Ausgangssignale von den Modulationselementen (3a, 3b) beim Passieren der jeweiligen Sensor-Einheit (5) intensitätsmoduliert und von dem jeweils zugehörigen Empfänger (9) in ein elektrisches Signal zur Ableitung zumindest eines elektrischen Motorsteuersignals umgesetzt werden.

## Beschreibung

Die Erfindung betrifft einen Drehzahl- und drehrichtungssteuerbaren Asynchronmotor für Fahrantriebe, insbesondere für Hub- und Fahrwerke, gemäß dem Obergriff des Anspruchs 1.

Aus dem Prospekt "Betriebsanleitung Einbau-Impulsgeber EG" der Mannesmann Demag Fördertechnik AG ist ein Verschiebeläufer-Asynchronmotor mit mechanischer Bremse für gesteuerte Fahrantriebe, insbesondere Hub- und Fahrwerke, bekannt, der sich in einem Motorgehäuse befindet, das an beiden Stirnseiten mit einem deckelförmigen Lagerschild verschlossen ist. Dieser Asynchronmotor weist eine auf der Motorwelle angeordnete Drehscheibe auf, die auf der hinteren Seite angeordnet ist, welche der Abtriebsseite gegenüberliegt. Die Drehscheibe ist in ihrem Randbereich mit Einzel-Magneten versehen, die in konstantem Winkelabstand zueinander und mit gleichem radialen Abstand zur Drehachse angeordnet sind. Auf Höhe der Magnete befindet sich ein diesen gegenüberliegender Hall-Sensor. Bei rotierender Drehscheibe wird der Hall-Sensor nacheinander von den einzelnen Modulationselementen zyklisch passiert, so daß am Ausgang des Hall-Sensors ein drehwinkelabhängiges Wechselsignal abnehmbar ist. Aus diesem Wechselsignal läßt sich die Drehzahl des Elektromotors bestimmen und der Asynchronmotor anhand der Drehzahl steuern oder regeln. Für die Drehrichtungsermittlung ist ein zweiter Hall-Sensor vorhanden, der in Drehrichtung gesehen hinter dem ersten Hall-Sensor auf gleicher Höhe angeordnet ist. Die Signale der beiden Hall-Sensoren weisen eine Phasenverschiebung auf, aus der die Drehrichtung ermittelbar ist.

Nachteilig ist bei diesem Asynchronmotor, daß der Signalgeber nicht für einen Motor mit Zylinderläufer und Magnetbremse geeignet ist, da bei diesem stark störende Magnetfelder auftreten und außerdem zwischen der Kurzschlußwicklung und dem Lagerschild nur wenig Platz vorhanden ist.

Weiter sind Asynchronmotoren mit Signalgebern für die Drehzahl- und Drehrichtungsbestimmung bekannt, bei denen außerhalb des Motors ein Drehgeber auf die Motorwelle aufgesetzt ist. Diese Ausführungsform eines Asynchronmotors hat den Nachteil, daß dieser nicht kleinbauende Motorantrieb mit erhöhten Kosten verbunden ist.

Die Aufgabe der Erfindung ist es, einen kompatkbauenden Asynchronmotor mit Zylinderläufer für drehzahl- und drehrichtungsgesteuerte Fahrantriebe kostengünstig so auszugestalten, daß dieser auch bei Vorhandensein einer hinterseitigen Magnetbremse mit starken Magnetfeldern störungsfrei steuerbar ist.

Die Lösung dieser Aufgabe ist gekennzeichnet durch die im Patentanspruch 1 angegebenen Merkmale. Durch die kennzeichnenden Merkmale der Unteransprüche 2 bis 7 ist der Asynchronmotor in vorteilhafter Weise weiter ausgestaltbar.

Die Lösung ist ein Drehzahl- und drehrichtungssteuerbarer Asynchronmotor für Fahrantriebe, insbesondere für Hub- und Fahrwerke, mit einem Motorgehäuse, das auf beiden Stirnseiten je ein Lagerschild aufweist und eine ringförmige von einer Motorwelle getragene Kurzschlußwicklung sowie auf der der Abtriebsseite gegenüberliegenden hinteren Seite mindestens zwei in Motordrehrichtung gesehen hintereinanderliegende Sensor-Einheiten und eine mit den Sensor-Einheiten zusammenwirkende, zwischen der Kurzschlußwicklung und dem hinterseitigen Lagerschild auf der Motorwelle befestigte kreisförmige Drehscheibe mit Modulationselementen umfaßt, wobei die Modulationselemente am Außenumfang der Drehscheibe angeordnet sind und wobei die Sensor-Einheiten jeweils einen opto-elektronischen Empfänger und einen gegenüberliegenden elektro-optischen Sender aufweisen, deren optische Ausgangssignale von den Modulationselementen beim Passieren der jeweiligen Sensor-Einheit intensitätsmoduliert und von dem jeweils zugehörigen Empfänger in ein elektrisches Signal zur Ableitung zumindest eines elektrischen Motorsteuersignals umgesetzt werden. Dabei sind die Modulationselemente an einer auf der Motorwelle zwischen der Kurzschlußwicklung und dem hinterseitigen Lagerschild drehfest angeordneten kreisförmigen Drehscheibe vorgesehen. Mit der optischen Ausführung der Sensor-Einheiten wird eine hohe Störunempfindlichkeit gegenüber Magnetfeldern, also insbesondere den Magnetfeldern der Kurzschlußwicklung und der Magnetbremse, bei gleichzeitig kompatkbauender Motorausführung erreicht.

Eine störungssichere Ausführung der Sensor-Einheiten erhält man, wenn die Modulationselemente lichtundurchlässig ausgebildet sind und somit den Lichtstrom beim Passieren kurzzeitig unterbrechen, was eine maximal mögliche Anderung des Sensorsignals ergibt.

Zweckmäßigerweise sind die Modulationselemente als am Rand der Drehscheibe angeordnete, sich in eine gemeinsame Richtung parallel zur Motorwelle erstreckende Zähne ausgebildet. Diese Form der Modulationselemente erfordert wenig Platz und ist leicht herzustellen.

Die Drehrichtung läßt sich sicher bestimmen, wenn zwei unmittelbar benachbarte Sensor-Einheiten in Drehrichtung gesehen einen Abstand aufweisen, welcher gleich der 1,5-fachen Zahnbreite ist.

Die elektronische Schaltung des Asynchronmotors läßt sich vereinfachen, wenn eine zusätzliche Sensor-Einheit vorgesehen ist, die gegenüber den beiden anderen Sensor-Einheiten in Motorwellenlängsrichtung versetzt angeordnet ist. Diese Anordnung der zusätzlichen Sensor-Einheit ermöglicht es, getrennt vom Drehrichtungssignal ein einfach auswertbares Drehzahlsignal mit schmaler Impulsbreite zu erzeugen.

Eine einfache Lösung zur Erzeugung eines einfachen Drehzahlsignals erhält man, wenn einer der Zähne in Richtung der Zahnerstreckung derartig verlängert ist, daß dieser den Lichtstrom der versetzt angeordneten Sensor-Einheit moduliert.

Einen kompatkbauenden vielseitig einsetzbaren Asynchronmotor erhält man, wenn die Magnetbremse an dem hinterseitigen Lagerschild angeordnet ist.

Ein Ausführungsbeispiel der Erfindung ist in der Zeichnung dargestellt und wird nachfolgend näher beschrieben. Es zeigen:
- Fig. 1: einen Gesamtquerschnitt durch einen drehzahl- und drehrichtungssteuerbaren Asynchronmotor,
- Fig. 2: einen Ausschnitt eines geöffneten Motorgehäuses eines Asynchronmotors in perspektivischer Darstellung,
- Fig. 3: den Asynchronmotor mit Signalgeber gemäß Fig. 2 aus einer anderen Perspektive,
- Fig. 4: den Signalgeber mit drei Sensor-Einheiten in perspektivischer Darstellung und
- Fig. 5: einen Querschnitt durch das Gehäuse des Signalgebers gemäß Fig. 4.

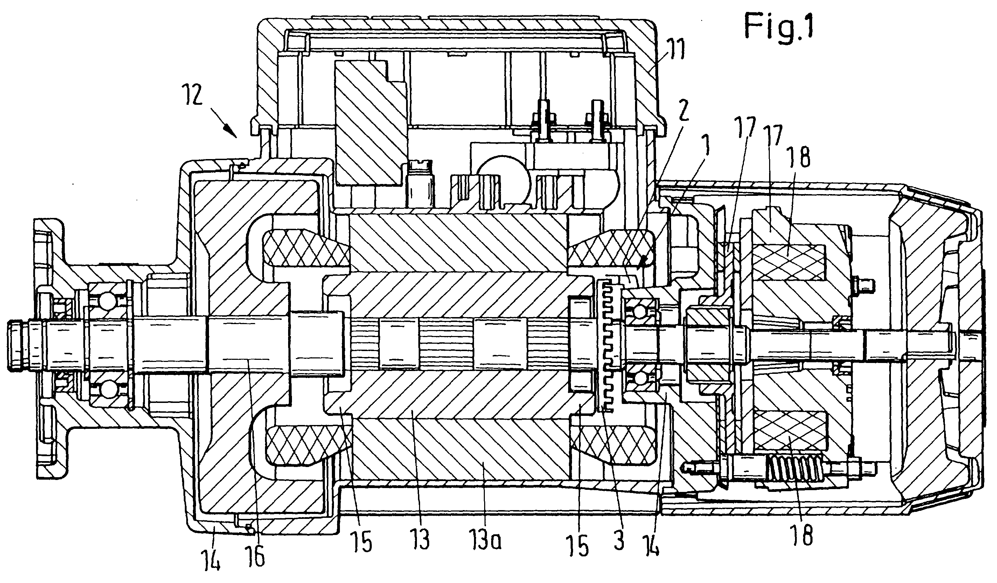

Fig. 1 zeigt einen Gesamtquerschnitt eines drehzahl- und drehrichtungssteuerbaren Asynchronmotors 12 mit Zylinderläufer 13 und Stator 13a für einen Fahrantrieb. Der Asynchronmotor 12 weist ein Motorgehäuse 11 auf, an dem auf beiden Stirnseiten ein Lagerschild 14 angeordnet ist. In Fig. 1 ist eine auf einer Motorwelle 16 befestigte Kurzschlußwicklung in Form eines Kurschlußrings 15 zu sehen, neben dem unmittelbar anschließend ein Signalgeber 1 vollständig im Motorgehäuse 11 untergebracht ist. Neben dem hinteren Lagerschild 14 befindet sich eine bei Zylinderläufer-Asynchronmotoren 12, 13 übliche Magnetbremse 17 mit einer Spule 18.

Anhand der Ausgangssignale des Signalgebers 1 sind die Drehzahl und die Drehrichtung des Asynchronmotors 12 auf elektronischem Wege steuerbar, beispielweise mittels einer nicht gezeigten Regelungsvorrichtung.

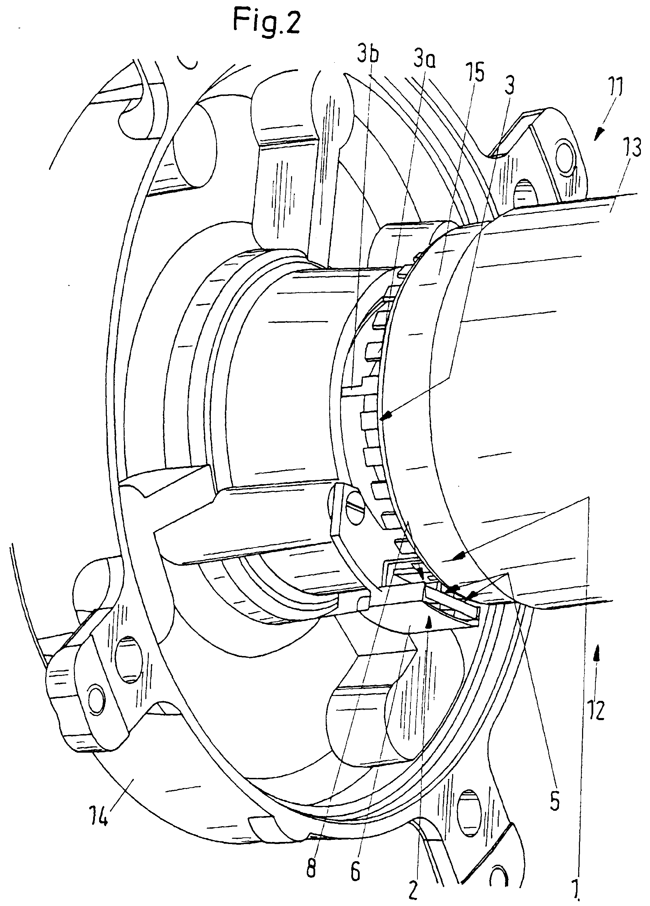

Fig. 2 zeigt einen Ausschnitt des geöffneten Motorgehäuses 11 mit dem Asynchronmotor 12 mit Blick auf die der Abtriebsseite gegenüberliegenden hinteren Seite, wobei das hintere Lagerschild 14 erkennbar ist.

Der Signalgeber 1 umfaßt eine Signal-Einheit 2 und eine Drehscheibe 3. Die Drehscheibe 3 ist in einem Motorgehäuse 11 auf der Motorwelle 16 fest angeordnet, so daß sich die Drehscheibe 3 zusammen mit der Motorwelle um eine gemeinsame Achse dreht. Die Signal-Einheit 2 ist am Lagerschild 14 des Motorgehäuses 11 befestigt. Sie besteht aus drei Sensor-Einheiten 5, die in einem gemeinsamen Gehäuse 6 untergebracht sind.

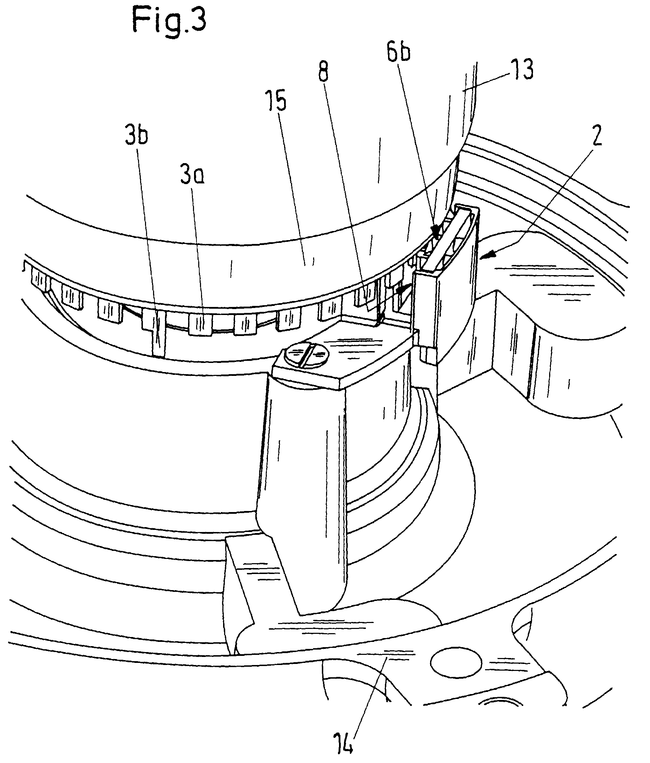

Wie Fig. 2 erkennen läßt, sind am kreisförmigen Rand der Drehscheibe 3 Modulationselemente 3a in Form von Zähnen mit gleicher Breite und Länge ausgebildet, die mit gleichem radialen Abstand vom Scheibenmittelpunkt angeordnet (3b hat die halbe Breite von 3a) sind. Diese erstrecken sich in eine gemeinsame Richtung parallel zur Motorwelle; sie bilden dabei einen kammartigen Kreisring, der mit Aussparungen versehen ist, die nach einer Seite hin offen sind. Fig. 3 zeigt den Signalgeber gemäß Fig. 2 aus einer anderen Perspektive.

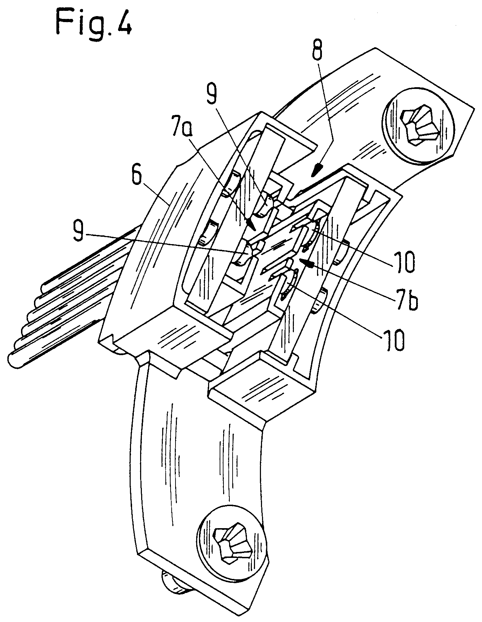

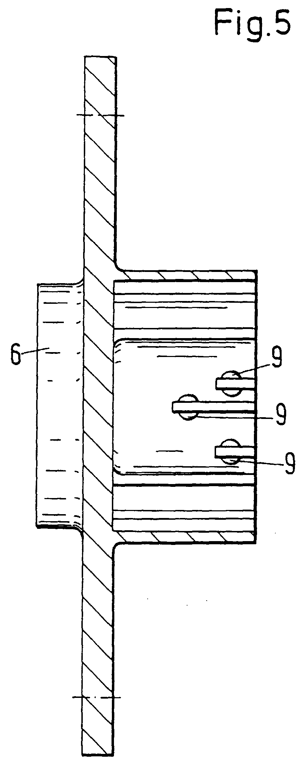

Fig. 4 zeigt das Gehäuse 6 des Signalgebers 1 in perspektivischer Darstellung. Das Gehäuse 6 weist zwei Kammern 6a, 6b auf, die sich unter Belassung eines dazwischenliegenden Spalts 8 parallel gegenüberliegen. In der unteren Kammer 6b sind elektro-optische Sender 10 in einer ersten Ebene angeordnet. Bei den Sendern 10 handelt es sich um Infrarot-Luminiszenzdioden. Den Sendern 10 liegen in einer zweiten Ebene als Fotodioden ausgebildete opto-elektronische Empfänger 9 gegenüber. Die erste und zweite Ebene verlaufen parallel zueinander, wobei jeweils ein Sender 9 jeweils einem Empfänger 9 gegenüberliegt. Sender 10 und Empfänger 9 jeder Sensor-Einheit 5 liegen jeweils auf einer senkrecht zur ersten und zweiten Ebene ausgerichteten Geraden. Weiter ist - insbesondere in Fig. 5 - zu erkennen, daß die aus dem mittleren Sender 10 und mittleren Empfänger 9 gebildete Sensor-Einheit 5 gegenüber den beiden anderen Sensor-Einheiten 5 nach hinten versetzt angeordnet ist.

Bei Motorbetrieb passieren die Zähne der Drehscheibe 3 in den Spalt 8 eingreifend nacheinander die Sensor-Einheiten 5 und unterbrechen dabei kurzzeitig die einzelnen Lichtströme.

Die beiden in Drehrichtung gesehen vornliegenden Sensor-Einheiten 5 weisen einen Abstand voneinander auf, der gleich dem 1,5-fachen der Zahnbreite ist. Die nach hinten versetzt angeordnete Sensor-Einheit 5 wird nur von dem verlängerten Zahn (Modulationselement 3b; s. hierzu Fig. 2) unterbrochen. Selbstverständlich kann dieser Zahn auch verkürzt ausgebildet sein (äquivalente Lösung). Der auf diese Weise erzeugte schmale elektrische Impuls ermöglicht eine genaue Bestimmung der Motordrehzahl. Die Sender 10 und Empfänger 9 sind in bekannter Art und Weise an eine elektronische Schaltung angeschlossen, die die elektrischen Signalverläufe zur Bestimmung der Drehrichtung und der Drehzahl auswertet und einer weiteren Verwendung zur Ableitung eines Motorsteuersignals (und/oder einer Anzeigeinheit) zur Verfügung stellt.

Die Modulationselemente 3a, 3b können auch lichtdurchlässig ausgebildet sein. So ist es z.B. möglich, an der Drehscheibe 3 einen Kreisring aus lichtdurchlässigem Material vorzusehen, dessen Lichtdurchlässigkeit sich in Drehrichtung der Drehscheibe 3 periodisch ändert. Die Periode dieser Transmissionsänderung kann dabei z.B. der doppelten Zahnbreite entsprechen.

### Bezugszeichenliste:

- 1: Signalgeber
- 2: Signal-Einheit
- 3: Drehscheibe
- 3a: Signalelement
- 3b: Signalelement
- 5: Sensor-Einheit
- 6: Gehäuse
- 6a: Kammer
- 6b: Kammer
- 8: Spalt
- 9: Empfänger
- 10: Sender
- 11: Motorgehäuse
- 12: Asynchronmotor
- 13: Zylinderläufer
- 13a: Stator
- 14: Lagerschild
- 15: Kurschlußring
- 16: Motorwelle
- 17: Magnetbremse
- 18: Spule

## Patentansprüche

1. Drehzahl- und drehrichtungssteuerbarer Asynchronmotor (12) für Fahrantriebe, insbesondere für Hub- und Fahrwerke,
mit einem Motorgehäuse (11), das auf beiden Stirnseiten je ein Lagerschild (14) aufweist und eine ringförmige von einer Motorwelle getragene Kurzschlußwicklung sowie auf der der Abtriebsseite gegenüberliegenden hinteren Seite mindestens zwei in Motordrehrichtung gesehen hintereinanderliegende Sensor-Einheiten (5) und eine mit den Sensor-Einheiten (5) zusammenwirkende, zwischen der Kurzschlußwicklung und dem hinterseitigen Lagerschild (14) auf der Motorwelle befestigte kreisförmige Drehscheibe (3) mit Modulationselementen (3a, 3b) umfaßt,
wobei die Modulationselemente (3a, 3b) am Außenumfang der Drehscheibe (3) angeordnet sind und
wobei die Sensor-Einheiten (5) jeweils einen opto-elektronischen Empfänger (9) und einen gegenüberliegenden elektro-optischen Sender (10) aufweisen, deren optische Ausgangssignale von den Modulationselementen (3a, 3b) beim Passieren der jeweiligen Sensor-Einheit (5) intensitätsmoduliert und von dem jeweils zugehörigen Empfänger (9) in ein elektrisches Signal zur Ableitung zumindest eines elektrischen Motorsteuersignals umgesetzt werden.

2. Asynchronmotor nach Anspruch 1,
**dadurch gekennzeichnet,**
daß die lichtundurchlässig ausgebildeten Modulationselemente (3a, 3b) den Lichtstrom beim Passieren unterbrechen.

3. Asynchronmotor nach einem der Ansprüche 1 oder 2,
**dadurch gekennzeichnet,**
daß die Modulationselemente (3a, 3b) als über den Scheibenaußenumfang gleichmäßig verteilt angeordnete, sich in eine gemeinsame Richtung parallel zur Motorwelle erstreckende Zähne ausgebildet sind.

4. Asynchronmotor nach Anspruch 3,
**dadurch gekennzeichnet,**
daß zwei unmittelbar benachbarte Sensor-Einheiten (5) in Drehrichtung gesehen jeweils einen Abstand aufweisen, welcher der 1,5-fachen Zahnbreite entspricht.

5. Asynchronmotor nach einem der Ansprüche 1 bis 4,
**dadurch gekennzeichnet,**
daß eine dritte vorgesehene Sensor-Einheit (5) gegenüber den beiden anderen Sensor-Einheiten (5) in Motorwellenlängsrichtung versetzt angeordnet ist.

6. Asynchronmotor nach Anspruch 5,
**dadurch gekennzeichnet,**
daß einer der Zähne in Richtung der Zahnerstreckung derartig verlängert ist, daß dieser den Lichtstrom der versetzt angeordneten Sensor-Einheit (5) moduliert.

7. Asynchronmotor nach einem der Ansprüche 1 bis 6,
**dadurch gekennzeichnet,**
daß an dem hinterseitigen Lagerschild (14) eine Magnetbremse angeordnet ist.
